## Europäisches Patentamt
## European Patent Office
## Office européen des brevets

(19)

(11) Veröffentlichungsnummer: **0 492 139 B1**

(12) **EUROPÄISCHE PATENTSCHRIFT**

(45) Veröffentlichungstag der Patentschrift: **04.10.95**

(51) Int. Cl.6: **B01J 13/18**, C08K 9/10

(21) Anmeldenummer: **91119924.8**

(22) Anmeldetag: **22.11.91**

(54) **Mikrokapseln aus Melamin und deren Verwendung zur flammhemmenden Ausrüstung von Kunststoffen.**

(30) Priorität: **21.12.90 AT 2614/90**

(43) Veröffentlichungstag der Anmeldung:
**01.07.92 Patentblatt 92/27**

(45) Bekanntmachung des Hinweises auf die
Patenterteilung:
**04.10.95 Patentblatt 95/40**

(84) Benannte Vertragsstaaten:
**AT DE**

(56) Entgegenhaltungen:
**EP-A- 0 178 564**
**DE-A- 2 704 274**
**FR-A- 2 119 743**

**DATABASE WPIL, Accession Nr. 87-352623**
**[50], Derwent Publicatons Ltd, London,GB; &**
**JP-A-62 256 813 (HUMAN IND. CORP. K.K.)**

(73) Patentinhaber: **Chemie Linz GmbH**
**St.Peter-Strasse 25**
**A-4021 Linz (AT)**

(72) Erfinder: **Horacek, Heinrich, Dr.**
**Am Wiesenrain 1**
**A-4040 Puchenau (AT)**

(74) Vertreter: **Kunz, Ekkehard, Dr.**
**Chemie Linz GmbH**
**Abteilung Patente**
**St. Peter-Str. 25**
**A-4021 Linz (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Mikrokapseln, die aus Melaminpulver bestehen, dessen Teilchen in einer Hülle aus Melaminharzen eingekapselt sind, sowie deren Verwendung zur flammhemmenden Ausrüstung von Kunststoffen.

Die flammhemmende Ausrüstung von Kunststoffen mittels flüssiger Halogenverbindungen wird beispielsweise in der DE-A-21 13 470, mittels rotem Phosphor in der DE-A-26 46 835, mittels Ammoniumpolyphosphat in der EP-A-0 180 790 oder DE-A-29 49 537, mittels Melamin in der AT-A-197/90 beschrieben. Dabei ist es notwendig die Halogenverbindungen und den Phosphor wegen ihrer Toxizität, sowie den Phosphor und das Ammoniumpolyphosphat wegen ihrer Hydrolyseempfindlichkeit bei Kontakt mit Wasser als Mikrokapseln mit einer Kunstharzhülle, beispielsweise aus Melaminformaldehydharz oder Polyharnstoff, einzusetzen. Derartige Mikrokapseln sind beispielsweise in DE-A-27 04 274 oder EP-A-178 564 beschrieben. Da Melamin weder toxisch noch hydrolyseempfindlich ist, wird es zumeist direkt in Form von Melaminpulver verwendet. Für viele Einsatzgebiete sind jedoch die mechanischen Eigenschaften der mit Melamin ausgerüsteten Kunststoffe nicht ausreichend. Gemäß FR-B-2 119 743 werden Textilfasern aus Kunststoffen mit Melamin, das mit Polystyrol, Ethylzellulose, Polyurethanharnstoffen oder Polyharnstoffen verkapselt ist, flammfest ausgerüstet.

Aufgabe der Erfindung war es, ein einfaches Verfahren zur Herstellung von Melamin-Mikrokapseln bereitzustellen, die Kunststoffen außer einer guten Flammfestigkeit auch verbesserte mechanische Eigenschaften, auch im Langzeitverhalten, verleihen. Die Lösung der Aufgabe wurde darin gefunden, Melaminpulver vor der Einarbeitung in den Kunststoff durch Hindurchleiten von Formaldehyd in einer Melaminharzhülle einzukapseln.

Gegenstand der vorliegenden Erfindung ist demnach ein Verfahren zur Herstellung von Mikrokapseln, die aus Melaminpulver bestehen, dessen Teilchen in einer Hülle aus Melaminharzen eingekapselt sind, dadurch gekennzeichnet, daß gasförmiges Formaldehyd durch Melaminpulver geleitet wird, wobei sich an der Oberfläche der Melaminteilchen eine Melaminharzhülle bildet. Vorteilhafterweise wird dabei feuchtes Melaminpulver eingesetzt.

Melaminpulver ist im Handel, beispielsweise bei Chemie Linz, erhältlich. Die mittlere Teilchengröße beträgt etwa 5 bis 200 μm. In den Mikrokapseln wird bevorzugt Melamin mit einer mittleren Teilchengröße von 0,5 bis 100 μm verwendet. Zur Erzielung der feinen Korngrößen muß das Melamin, beispielsweise auf einer Kugelmühle, zusätzlich gemahlen werden.

Die mittlere Teilchengröße wurde mit einem CILAS-Granulometer 715 gemessen und gibt in einem Diagramm, bei dem die Teilchengröße gegen die Menge aufgetragen wird, jene Teilchengröße an, bei der die Teilchenmenge in zwei gleiche Mengen geteilt wird.

Die erfindungsgemäß hergestellten Mikrokapseln werden bevorzugt zur flammhemmenden Ausrüstung von Kunststoffen verwendet. Dabei werden mit Melamin flammhemmend ausgerüstete Kunststoffe erhalten, die als Flammhemmer erfindungsgemäß hergestellte Melamin-Mikrokapseln enthalten. Die Menge der zugesetzten Mikrokapseln richtet sich nach den Anforderungen, die an die Flammfestigkeit der Kunststoffe gestellt werden. Vorteilhafterweise werden die Mikrokapseln in einer solchen Menge verwendet, die einem Gehalt von 5 bis 50 Gew.% Melamin, bezogen auf den flammhemmend ausgerüsteten Kunststoff, entspricht.

Der überraschende Vorteil der Mikroverkapselung liegt neben der Möglichkeit ihrer besonders einfachen Herstellung vor allem darin, daß die mechanischen Eigenschaften der flammhemmend ausgerüsteten Kunststoffe und insbesondere das Langzeitverhalten der mechanischen Eigenschaften besser sind als die entsprechenden mechanischen Eigenschaften bei Verwendung von nicht eingekapseltem Melaminpulver.

Besonders bevorzugt werden die erfindungsgemäß hergestellten Mikrokapseln zur flammhemmenden Ausrüstung von Polyurethanschaumstoffen verwendet. Polyurethanschaumstoffe können durch Umsetzung von Polyolen, Polyisocyanaten, üblichen Schaumbildnern und Additiven bzw. Hilfsstoffen, beispielsweise wie in AT 197/90 beschrieben, hergestellt werden. Die als Flammhemmer verwendeten Mikrokapseln werden dabei entweder den Polyolen oder den Polyisocyanaten bereits vor deren Umsetzung zugesetzt, wobei Dispersionen der erfindungsgemäßen Mikrokapseln in den Polyolen und/oder Polyisocyanaten erhalten werden. Dabei erweist es sich als besonders vorteilhaft, den Polyol-Dispersionen zur Verhinderung des Absetzens der Mikrokapseln und damit zur Erzielung einer stabilen Dispersion, Cyanursäure zuzusetzen. Die bei der Umsetzung erhaltenen flammhemmend ausgerüsteten Polyurethanschaumstoffe enthalten die Melaminteilchen in einer Melaminharzhülle in Form von Mikrokapseln.

Beispiel 1:

100 Gew.Teile Melamin mit einer mittleren Teilchengröße von 50 μm wurden mit 30 Gew.Teilen Wasser befeuchtet und unter Rühren gasförmiges Formaldehyd durchgeleitet, wobei sich an der Oberfläche der Melaminteilchen eine Melaminformaldehydharzschicht bildete. Anschließend wurde zur Aushärtung und Entfernung des Wassers während 1 Stunde auf 100°C erhitzt. Die erhaltenen Mikrokapseln hatten eine mittlere Teilchengröße von 50 μm und bestanden aus 90 Gew.% Melamin und 10 Gew.% Melaminformaldehyharz als Wandmaterial.

Beispiel 2:

Die gemäß Beispiel 1 hergestellten Mikrokapseln wurden zur Herstellung von flammhemmend ausgerüsteten Polyurethanschaumstoffen verwendet. Eine Polyolmischung (Formulierung A), die

100 Gew. Teile Polyetherpolyol (Desmophen 7652 Y, Bayer)
39 Gew. Teile Mikrokapsel gemäß Beispiel 1
1 Gew. Teil Cyanursäure
4 Gew. Teile Wasser
2 Gew. Teile Diethanolamin
0,1 Gew. Teile Triethylendiamin in Dipropylenglykol 33 %ig (DABCO 33LV, Fa.Air Products)
0,05 Gew. Teile Bis(Dimethylaminoethyl)ether (NiaxA-1, Fa. UCC)
0,25 Gew. Teile Silikon-Stabilisator (VP AC 3367, Bayer)
0,1 Gew. Teile Dibutylzinndilaurat (Fa. Bärlocher, München)
5 Gew. Teile Tetrakis (2-chlorethyl)ethylendiphosphat (Thermolin 101, Fa. Olin)

enthielt, wurde mit 50,7 Gew.Teilen Toluylendiisocyanat (Bayer) zu einem Polyurethanschaumstoff verschäumt. Das Verhältnis NCO : OH der Polyol-Diisocyanat-Mischung lag bei 1,08, die Rührzeit der Mischung bei 5 sec, die Steigzeit bei 60 sec, die Fadenziehzeit bei 5 min und die Klebfreizeit bei 20 min.

An den Polyurethanschaumstoffen wurde die Weiterreißfestigkeit nach DIN 53575 und die Zugfestigkeit nach DIN 53571, sowie das Brandverhalten nach BS 5852 bestimmt. Gemäß BS 5852 werden etwa 1 kg des Polyurethanschaumstoffes mit Crib 5 beflammt, wobei ein maximaler Gewichtsverlust von 60 g zulässig ist. Die Werte sind in Tabelle 1 zusammengestellt.

Die Schaumstoffe wurden anschließend einem Alterungstest unterworfen, bei dem sie 5 Tage unter Extrembedingungen bei 90°C und maximaler relativer Feuchte gelagert wurden. Anschließend wurde die Änderung der Stauchhärte nach DIN 53577 und DIN 53578, sowie die Änderung des Druckverformungsrestes bei 90 % Verformung nach DIN 53572 gemessen. Die Werte sind in Tabelle 2 zusammengestellt und zeigen eine geringere Änderung der Werte und somit eine bessere Langzeitstabilität der mechanischen Eigenschaften bei den Schaumstoffen, die mit den erfindungsgemäßen Mikrokapseln flammfest ausgerüstet wurden.

Beispiel 3:

Analog zu Beispiel 2 wurden unter Verwendung der Mikrokapseln gemäß Beispiel 1 flammhemmend ausgerüstete Polyurethanschaumstoffe hergestellt, jedoch mit dem Unterschied, daß als Polyetherpolyol 100 Gew.Teile Polyurax 1408 (Fa. BP) an Stelle von Desmophen 7652 Y verwendet wurden, daß 0,20 Gew.Teile Dibutylzinndilaurat an Stelle von 0,10 Gew.Teilen verwendet wurden, und daß die Polyolmischung zusätzlich 1 Gew.Teil Schaumstabilisator SH 208 (Fa BP), 0,5 Gew.Teile Schaumstabilisator SH 214 (Fa. BP) und 19 Gew.Teile Frigen 11 (Fa. Hoechst) enthielt (Formulierung B). Die Werte der Eigenschaften der Polyurethanschaumstoffe sind in den Tabellen 1 und 2 zusammengestellt.

Vergleichsbeispiel V 4:

Analog zu Beispiel 2 wurden auf Basis der Polyol-Formulierung A flammhemmend ausgerüstete Polyurethanschaumstoffe hergestellt, jedoch mit dem Unterschied, daß als Flammhemmer 39 Gew.Teile nicht verkapseltes Melamin mit einer mittleren Teilchengröße von 50 μm an Stelle der erfindungsgemäßen Mikrokapseln verwendet wurden. Die Eigenschaften der Polyurethanschaumstoffe sind in den Tabellen 1 und 2 zusammengestellt.

3

Vergleichsbeispiel V 5:

Analog zu Beispiel 3 wurden auf Basis der Polyol-Formulierung B flammhemmend ausgerüstete Polyurethanschaumstoffe hergestellt, jedoch mit dem Unterschied, daß als Flammhemmer 39 Gew.Teile nicht verkapseltes Melamin mit einer mittleren Teilchengröße von 50 $\mu$m an Stelle der erfindungsgemäßen Mikrokapseln verwendet wurden. Die Eigenschaften der Polyurethanschaumstoffe sind in den Tabellen 1 und 2 zusammengestellt.

Tabelle 1

| Eigenschaften der Polyurethanschaumstoffe | | | | | | | |
|---|---|---|---|---|---|---|---|
| Bsp. | Mikrokapsel Gew% | Melamin Gew.% | Formulierrung | Dichte (g/l) | Zugfestig keit (kPa) | Weiterreißfestigkeit (N/m) | Brandverhalten BS 5852 (g) |
| 2 | 22 | 20 | A | 34 | 90 | 275 | 24 |
| 3 | 20 | 18 | B | 34 | 90 | 295 | 16 |
| V4 | - | 22 | A | 30 | 90 | 260 | 20 |
| V5 | - | 20 | B | 30 | 80 | 270 | 25 |

Tabelle 2:    Eigenschaften der Polyurethanschaumstoffe im Langzeitverhalten

a) vor

b) nach 5tägiger Lagerung bei 90°C und maximaler relativer Feuchte

| Beispiel | Druckverformungsrest (%) | | Stauchhärte (kPa) | |
|---|---|---|---|---|
| | a | b | a | b |
| 2 | 13 | 17 | 3,8 | 3,8 |
| 3 | 12 | 14 | 7,5 | 7,5 |
| V4 | 10 | 20 | 3,5 | 3,0 |
| V5 | 15 | 25 | 6,5 | 6,0 |

Aus Tabelle 1 ist ersichtlich, daß die mechanischen Eigenschaften der mit den erfindungsgemäßen Mikrokapseln ausgerüsteten Schaumstoffe, bei etwa gleichem Brandverhalten, in den meisten Fällen besser als jene der mit Melaminpulver ausgerüsteten Schaumstoffe sind. Aus Tabelle 2 ist ersichtlich, daß die Änderung des Druckverformungsrestes nach 5tägiger Extremlagerung bei den mit den erfindungsgemäßen Mikrokapseln flammhemmend ausgerüsteten Schaumstoffen weitaus geringer ist als bei den mit Melaminpulver ausgerüsteten Schaumstoffen. Die Stauchhärte der mit den erfindungsgemäßen Mikrokapseln ausgerüsteten Schaumstoffe bleibt nach der 5tägigen Lagerung unter Extrembedingungen nahezu konstant, während die Werte der mit Melaminpulver ausgerüsteten Schaumstoffe stark abfallen. Die mit den erfindungsgemäßen Mikrokapseln ausgerüsteten Schaumstoffe zeigen demnach verbesserte mechanische Eigenschaften, die sich insbesondere im Langzeitverhalten positiv bemerkbar machen.

**Patentansprüche**

1.  Verfahren zur Herstellung von Mikrokapseln, die aus Melaminpulver bestehen, dessen Teilchen in einer Hülle aus Melaminharzen eingekapselt sind, dadurch gekennzeichnet, daß gasförmiges Formaldehyd durch Melaminpulver geleitet wird, wobei sich an der Oberfläche der Melaminteilchen eine Melaminharzhülle bildet.

2.  Verfahren gemäß Anspruch 1, dadurch gekennzeichnet, daß die mittlere Teilchengröße des Melaminpulvers bei 0,5 bis 100 $\mu$m liegt.

3.  Verwendung von gemäß Anspruch 1 oder 2 hergestellten Mikrokapseln zur flammhemmenden Ausrüstung von Kunststoffen.

4.  Flammhemmend ausgerüsteter Kunststoff, dadurch gekennzeichnet, daß er als Flammhemmer Mikrokapseln enthält, die gemäß Anspruch 1 oder 2 hergestellt sind.

**Claims**

1.  A method for producing microcapsules consisting of melamine powder, the particles of which are encapsulated in a shell of melamine resin characterized in that gaseous formaldehyde is conducted through melamine powder, whereby a shell of melamine resin forms on the surface of the melamine particles.

2.  A method as claimed in Claim 1, characterized in that the average particle size of the melamine powder is 0.5 to 100 $\mu$m.

3.  An application of microcapsules, produced as claimed in any of claims 1 or 2 as a flame-retardant finish for plastics.

4.  A plastic with a flame-retardant finish, characterized in that it contains microcapsules which function as a flame retardant and which are produced as claimed in any of claims 1 or 2.

**Revendications**

1.  Procédé pour la fabrication de microcapsules en mélamine pulvérisée dont les particules sont encapsulées dans une enveloppe de résine de mélamine, caractérisé en ce qu'un aldéhyde formique gazeux est conduit à travers de la mélamine pulvérisée, une enveloppe en résine de mélamine se formant à la surface des particules de mélamine.

2.  Procédé selon la revendication 1, caractérisé en ce que la granulométrie moyenne des particules de mélamine pulvérisée est comprise entre 0,5 et 100 $\mu$m.

3.  Utilisation de microcapsules fabriquées selon la revendication 1 ou 2 pour l'ignifugation de matières plastiques.

4.  Matière plastique ignifugée, caractérisée en ce que qu'elle contient, comme préparation ignifuge, des microcapsules fabriquées selon la revendication 1 ou 2.